# EUROPEAN PATENT SPECIFICATION

(11) **EP 4 555 499 B1**
(45) Date of publication and mention of the grant of the patent: **09.09.2026**
(21) Application number: 22754316.2
(22) Date of filing: 14.07.2022
(51) Int. Cl.: G08B 17/00, G06N 20/00

(54) **METHOD AND SYSTEM FOR FIRE DETECTION**
VERFAHREN UND SYSTEM ZUR BRANDERKENNUNG
PROCÉDÉ ET SYSTÈME DE DÉTECTION D'INCENDIE

(43) Date of publication of application: 21.05.2025
(73) Proprietor: Robert Bosch GmbH, 70442 Stuttgart (DE)
(72) Inventor: CHAN, Cawin, Singapore (SG); NGO, Chi Trung, Singapore (SG)
(86) International application number: PCT/EP2022/069752
(87) International publication number: WO 2024/012684

(56) References cited:
- KR-A- 20220 053 855
- KR-B1- 102 275 989
- US-A1- 2009 140 868
- US-A1- 2020 327 202
- WHITAKER DARREN A ET AL: "A simple algorithm for despiking Raman spectra", CHEMOMETRICS AND INTELLIGENT LABORATORY SYSTEMS, ELSEVIER SCIENCE PUBLISHERS B.V. AMSTERDAM, NL, vol. 179, 28 June 2018 (2018-06-28), pages 82 - 84, XP085421694, ISSN: 0169-7439, DOI: 10.1016/J.CHEMOLAB.2018.06.009

## Description

### TECHNICAL FIELD

The present disclosure relates to method and system for fire detection.

### BACKGROUND

Fire detection devices such as smoke detectors are utilized widely for residential safety. Two known smoke detection technologies are photoelectric and ionization smoke detection. A photoelectric detector uses light to detect fires. For example, an LED light emits a beam of light in a straight line across the chamber. When smoke enters the chamber, the light is scattered into a photosensor to trigger an alarm. An ionization detector has a small amount of radioactive material between two electrically charged plates. When smoke enters the chamber, it disrupts the flow of ions, thus reducing the flow of current and trigger an alarm. Conventional techniques for detecting fire include combining a smoke sensor and a carbon monoxide sensor which offers a reduction in false alarms through the use of an adaptively adjustable smoke alarm sensitivity.

There is a need to provide a method and system for fire detection that seeks to improve the fire detection accuracy and robustness against disturbances while providing explainability. US 2020/327202 A1 discloses a cloud-based fire protection system. US 2009/0140868 A1 discloses a smoke detection method, triggering a smoke detection alarm whenever the smoke detection ramp count exceeds a predetermined threshold and resetting the smoke detection ramp count whenever a smoke level sample decreases relative to a previous one.

### SUMMARY

The invention provides a computer-implemented method for fire detection according to claim 1, a system for fire detection according to claim 9, and a computer program product according to claim 10.

### BRIEF DESCRIPTION OF THE DRAWINGS

In the following description, various embodiments of the present disclosure are described with reference to the following drawings, in which:
FIG. 1 depicts a schematic flow diagram of a method of fire detection using at least one processor according to various embodiments of the present disclosure;
FIG. 2 depicts a schematic block diagram of a system for fire detection according to various embodiments of the present disclosure;
FIG. 3 illustrates a diagram of an exemplary fire detection framework for detecting fire from the sensor data;
FIGS. 4A-4B show graphs illustrating example of optical IR and optical blue data with spike removal;
FIG. 5 shows graphs illustrating an example of data labeling using change point detection algorithm;
FIGS. 6A-6D show diagrams illustrating confusion matrix with precision and recall of training and test data;
FIG. 7 depicts a flow chart of a fire alarm decision algorithm;
FIG. 8 shows a graph illustrating reliability and robustness of fire and nuisance events detection with various fire threshold; and
FIGS. 9A-9D demonstrate the SHAP Feature Importance and Summary Plots of each class in the dataset (ambient, fire and nuisance) using SHAP.

### DETAILED DESCRIPTION

Photoelectric smoke detectors respond quicker to smoldering fires, but are prone to false alarms caused by common disturbances such as overcooked food, steam or cigarette. Even particles in the air that are released by strong-smelling chemicals from common household cleaning products such as air fresheners can trigger false alarms. To address this issue, multiple sensors such optical blue light, thermal and chemical (e.g., CO) sensors were utilized. Conventional algorithms used in smoke detectors build features from raw sensory data and applies a combinational threshold of these features for the final fire alarm decision. This leads to the following issues. First, threshold tuning is a very time-consuming manual process when a new sensor is added or a new requirement has to be fulfilled. It also hardly covers complex situations where the combustion of different materials leads to different sensor data characteristics. Second, the sensitivity of smoke detectors has to be adjusted corresponding to different deployed environments. This requires the expertise and knowledge of a highly skilled technician. Third, Artificial Neural Network (ANN) which is known for self-learning ability can be used to solve the problem of manual threshold tuning; however, due to its complex architecture, the final results are not explainable which is very crucial for safety applications like fire detection. A common response to reduce the susceptibility to false fires against common disturbances is often met with the addition of new sensors to combat any hindsights of the previous sensors. However, with the need for further research from its technical viability to its commercial viability, this is a costly and time-intensive endeavor.

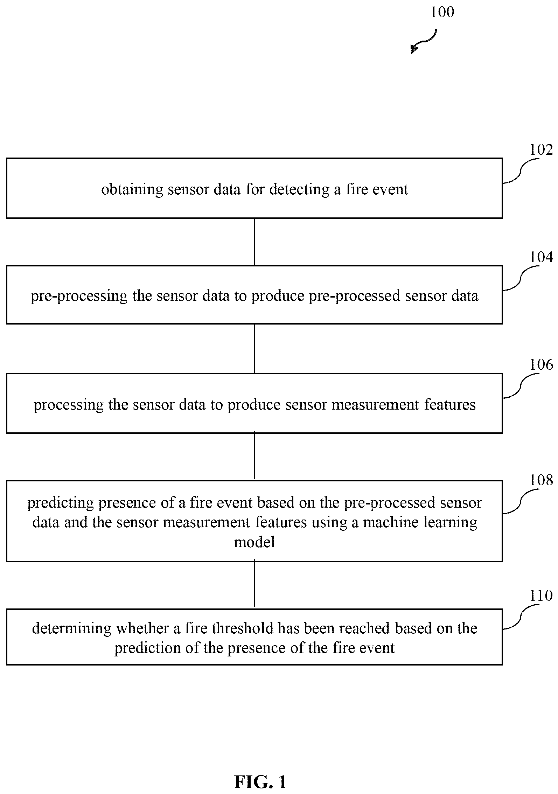

Various embodiments of the present disclosure provide a method (computer-implemented method) and a system (including a memory and at least one processor communicatively coupled to the memory) for fire detection that seek to overcome, or at least ameliorate, one or more of the deficiencies in conventional fire detection, such as to improve accuracy and/or reliability. FIG. 1 depicts a schematic flow diagram of a method 100 (computer-implemented method) of fire detection using at least one processor according to various embodiments of the present disclosure. The method 100 comprises obtaining (at 102) sensor data for detecting a fire event; pre-processing (at 104) the sensor data to produce pre-processed sensor data; processing (at 106) the sensor data to produce (e.g., extract) sensor measurement features; predicting (at 108) presence of a fire event based on the pre-processed sensor data and/or the sensor measurement features using a machine learning model; and determining (at 110) whether a fire threshold has been reached based on the prediction of the presence of the fire event.

In relation to 102, in various embodiments, the sensor data comprises a plurality of different types of sensor signals captured using a plurality of different types of sensor devices, respectively. The plurality of different types of sensor signals may comprise an optical infrared light signal, optical blue light signal, carbon monoxide signal and thermal (or temperature) signal. For example, the optical infrared light signal may be captured or acquired using an optical infrared light sensor, the optical blue light signal may be captured or acquired using an optical blue light sensor, the carbon monoxide signal may be captured or acquired using a carbon monoxide sensor and the thermal signal may be captured or acquired using a thermal sensor.

In relation to 104, in various embodiments, the pre-processed sensor data indicates a time of the fire event, and the above-mentioned pre-processing the sensor data to produce pre-processed sensor data comprises labeling the sensor data using a change point detection algorithm to determine the time of the fire event.

In various embodiments, the above-mentioned pre-processing the sensor data further comprises spike removal and/or baseline shift.

In relation to 106, the sensor measurement features comprise absolute values, gradient, integral, summation, multiplication and ratio of the sensor data.

In relation to 108, in various embodiments, the machine learning model (also referred to as the ML model) may be a tree-based model. Accordingly, various embodiments may advantageously remove threshold tuning process used in conventional techniques and distinguish the different complexity types of fires in different deployed environments by using the sensor measurement features, as well as improve the explainability of the ML model and feature importance due to the inherently less complex nature of tree-based models compared to neural networks. For example, with simpler and more predictable machine learning models such as tree-based models, individual feature importance may be examined. For example, the machine learning model may comprise XGBoost or random forest.

The machine learning model may be trained based on the sensor measurement features for the classification of a fire event against non-fire events. In various embodiments, the machine learning model is trained using a sensor dataset comprising data relating to fire events and data relating to a plurality of non-fire events including nuisance events and ambient conditions. For example, data relating to fire events may be or include data collected during occurrences or situation(s) which emit smoke, having relatively high heat compared to normal indoor/outdoor temperatures, infrared and/or ultraviolet light radiation, and/or any other resulting changes or products from fire. The ML model may self-learn to discern between different non-fire events, including common disturbances (e.g., nuisance events). For example, data relating to nuisance events may be or include data collected during occurrences or situation which emit smoke, having relatively high heat (e.g., compared to normal indoor/outdoor temperatures) and/or any other changes or products not resulting from fire, such as from smoke cigarettes, sparklers or steam from boiling water or cooking. For example, data relating to ambient conditions may be or include data collected during any other non-fire conditions such as normal indoor/outdoor conditions without smoke, normal indoor/outdoor temperatures. In other words, the plurality of non-fire events may be different types of non-fire events. In various embodiments, the ML model may be trained to classify input data into three classes, such as ambient, nuisance and fire.

In various embodiments, the machine learning model may be configured to output classification data. The classification data may include a first value corresponding to a fire event, a second value corresponding to a nuisance event, and a third value corresponding to ambient condition. For example, the machine learning model may be configured to classify ambient data relating to ambient condition (e.g., labelled as Class 0), fire data relating to fire events (e.g., labelled as Class 1) and nuisance data relating to nuisance events (e.g., labelled as Class 2).

In various embodiments, the method 100 further comprises determining importance of a sensor measurement feature on the prediction using a Shapley value based method.

In various embodiments, the method 100 further comprises determining whether to trigger a notification based on whether the fire threshold has been reached. The notification, for example, may include remote notification such as via electronic mail, short message services, messaging, sound notification (alarm), or combinations of the aforementioned. The notification may be an alarm which may include sound alarm, written alarm, or combinations thereof.

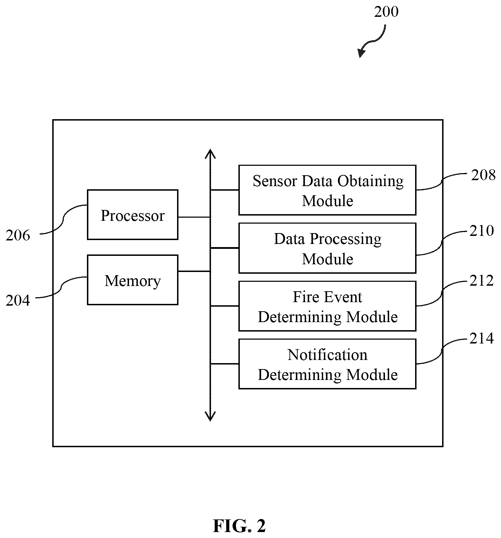

FIG. 2 depicts a schematic block diagram of a system 200 for fire detection according to various embodiments of the present disclosure, such as corresponding to the method 100 of fire detection as described hereinbefore according to various embodiments of the present disclosure. The system 200 comprises a memory 204, and at least one processor 206 communicatively coupled to the memory 204 and configured to: obtain sensor data for detecting a fire event; pre-process the sensor data to produce pre-processed sensor data; process the sensor data to produce sensor measurement features; predict presence of a fire event based on the pre-processed sensor data and/or the sensor measurement features using a machine learning model; and determine whether a fire threshold has been reached based on the prediction of the presence of the fire event.

It will be appreciated by a person skilled in the art that the at least one processor 206 may be configured to perform the required functions or operations through set(s) of instructions (e.g., software modules) executable by the at least one processor 206 to perform the required functions or operations. Accordingly, as shown in FIG. 2, the system 200 may further comprise a sensor data obtaining module (or circuit) 208 configured to obtain sensor data for detecting a fire event; a data processing module (or circuit) 210 configured to pre-process the sensor data to produce pre-processed sensor data, and process the sensor data to produce sensor measurement features; a fire event determining module (or circuit) 212 configured to predict presence of a fire event based on the pre-processed sensor data and/or the sensor measurement features using a machine learning model; and a notification determining module (or circuit) 214 configured to determine whether a fire threshold has been reached based on the prediction of the presence of the fire event.

It will be appreciated by a person skilled in the art that the above-mentioned modules (or circuits) are not necessarily separate modules, and two or more modules may be realized by or implemented as one functional module (e.g., a circuit or a software program) as desired or as appropriate without deviating from the scope of the present disclosure. For example, the sensor data module 208, the data processing module 210, the fire event determining module 212, and/or the notification determining module 214 may be realized (e.g., compiled together) as one executable software program (e.g., software application or simply referred to as an "app"), which for example may be stored in the memory 204 and executable by the at least one processor 206 to perform the functions/operations as described herein according to various embodiments.

In various embodiments, the system 200 corresponds to the method 100 as described hereinbefore with reference to FIG. 1, therefore, various functions/operations configured to be performed by the least one processor 206 may correspond to various steps or operations of the method 100 described hereinbefore according to various embodiments, and thus need not be repeated with respect to the system 200 for clarity and conciseness. In other words, various embodiments described herein in context of the methods are analogously valid for the respective systems (e.g., which may also be embodied as devices). For example, in various embodiments, the memory 204 may have stored therein the sensor data module 208, the data processing module 210, the fire event determining module 212, and/or the notification determining module 214, which respectively correspond to various steps or operations of the method 100 as described hereinbefore, which are executable by the at least one processor 206 to perform the corresponding functions/operations as described herein.

A computing system, a controller, a microcontroller or any other system providing a processing capability may be provided according to various embodiments in the present disclosure. Such a system may be taken to include one or more processors and one or more computer-readable storage mediums. For example, the system 200 described hereinbefore may include a processor (or controller) 206 and a computer-readable storage medium (or memory) 204 which are for example used in various processing carried out therein as described herein.

In various embodiments, there is provided a computer program product, embodied in one or more computer-readable storage mediums (non-transitory computer-readable storage medium), comprising instructions (e.g., the sensor data module 208, the data processing module 210, the fire event determining module 212, and/or the alarm determining module 214) executable by one or more computer processors to perform a method 100 of fire detection as described hereinbefore with reference to FIG. 1. Accordingly, various computer programs or modules described herein may be stored in a computer program product receivable by a system (e.g., a computer system or an electronic device) therein, such as the system 200 as shown in FIG. 2, for execution by at least one processor 206 of the system 200 to perform the required or desired functions.

In particular, for better understanding of the present disclosure and without limitation or loss of generality, various example embodiments of the present disclosure will now be described with respect to fire detection using four sensors which include infrared light sensor, blue light sensor, carbon monoxide (CO) sensor and temperature sensor. For example, these may be common sensors for smoke detectors, thus allowing for greater adoption. To remove threshold tuning process and distinguish the different complexity types of fires in different deployed environments, dominant features such as integral, slope and sensor data ratio representing the characteristics of fire and non-fire data may be constructed. The extracted features are trained with a machine learning model for the classification of a fire event against non-fire events. The ML model also self-learns to discern between different non-fire events, including common disturbances (e.g., nuisance events) such as smoke from cigarettes, sparklers or steam from boiling water or cooking. The final fire alarm decision may be designed to optimize the balance between its reliability and robustness and its speed of fire detection. To build trust and explain the ML model learnt to achieve such results, the SHAP (Shapley Additive Explanations) method as described in Lundberg, et. al., A unified approach to interpreting model predictions. In Proceedings of the 31st International Conference on Neural Information Processing Systems (NIPS'17) may be employed to interpret the impact of each feature on the prediction. SHAP is a method used to explain individual predictions, based on the game theoretically optimal Shapley values as described in Molnar, C. (2022, March 29). Interpretable machine learning. Christoph Molnar. Retrieved June 17, 2022, from https://christophm.github.io/interpretable-ml-book/. The Shapley value is the average marginal contribution of a feature value across all possible coalitions.

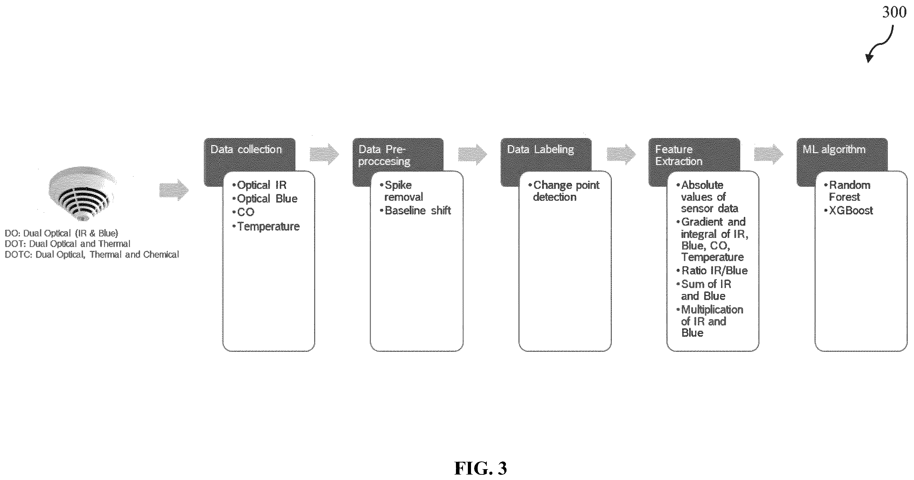

FIG. 3 illustrates a diagram of an exemplary fire detection framework 300 for detecting fire (e.g., a fire event) from the sensor data according to various example embodiments of the present disclosure. More particularly, FIG. 3 illustrates the procedure of using machine learning for fire classification. In various example embodiments, raw data (corresponding to "the sensor data" as described hereinbefore according to various embodiments) from optical IR, optical blue, CO and temperature sensors may be collected from the fire lab, with the EN54 standard fires and nuisance events that would commonly lead to false alarms. The sensor data may be pre-processed. A re-construct of the features from the sensor data may be performed by removing naturally occurring spikes (spike removal) and/or applying a baseline shift. For example, the Whitaker and Hayes' modified Z-score as described in Whitaker, et. al., A simple algorithm for despiking Raman spectra, Chemometrics and Intelligent Laboratory Systems, Volume 179, 2018, which takes advantage of the high intensity and small width of spikes was used for spike removal. Data labelling of the sensor data may be performed. The data labeling may be performed using a change point detection algorithm. The features such as absolute values of the sensor data, integral and gradient of the infrared signal, blue signal, carbon monoxide signal, and temperature/thermal signal, ratio of infrared to blue signal data, summation of infrared to blue signal data, and multiplication of infrared to blue signal data, are then extracted. This allows the smoke detection model to gain greater insights of the pre-existing sensor data. Next, a machine learning model (or algorithm) such as the Random Forest or XGBoost model with limited tree depth may be used for the self-learning of extracted features. The usage of tree-based models largely allows to improve the explainability of the ML model and feature importance due to the inherently less complex nature compared to neural networks. This is advantageous as the ML model is applied to areas of safety where it has the responsibility of saving lives.

### Data collection

According to various example embodiments, the standard DIN EN 54-7 fires, ambient and nuisance data are collected from a standard fire lab. Multiple lab sensors and multiple smoke detectors are mounted to the ceiling and each fire is started after a period to collect ambient data. These lab sensors act as verifiers for the validity of the test fire. The sampling rate of smoke detectors varies between 1s and 4s, in a non-limiting example. For example, ambient condition may be a surrounding lab environment. In a non-limiting example, fire tests may include TF01- Open wood fire, -TF02- Smoldering (pyrolysis) wood fire, TF03-Glowing smoldering cotton fire, TF04-Open plastics (polyurethane) fire, TF05-Liquid (heptane) fire, TF08-Low temperature black smoke (decalene) liquid fire. Three common disturbance events referred to as nuisance data is collected to improve the ML model's resilience towards false alarms. In a non-limiting example, nuisance tests may include nuisance events due to cigarette, sparkler, steam (e.g., from boiling water).

### Data pre-processing

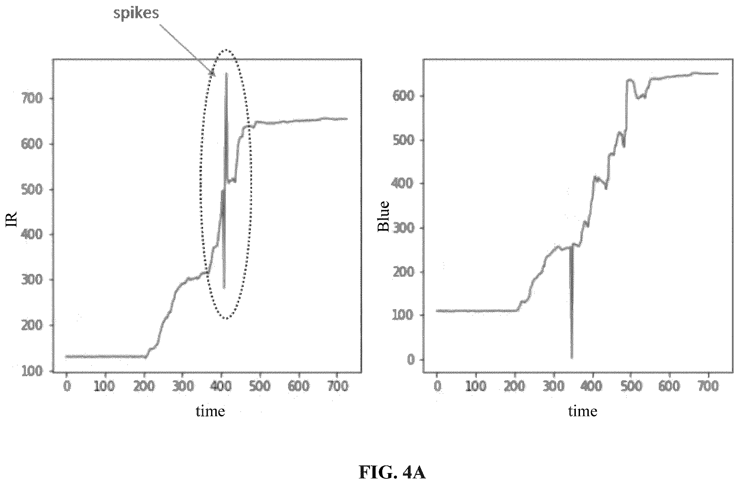

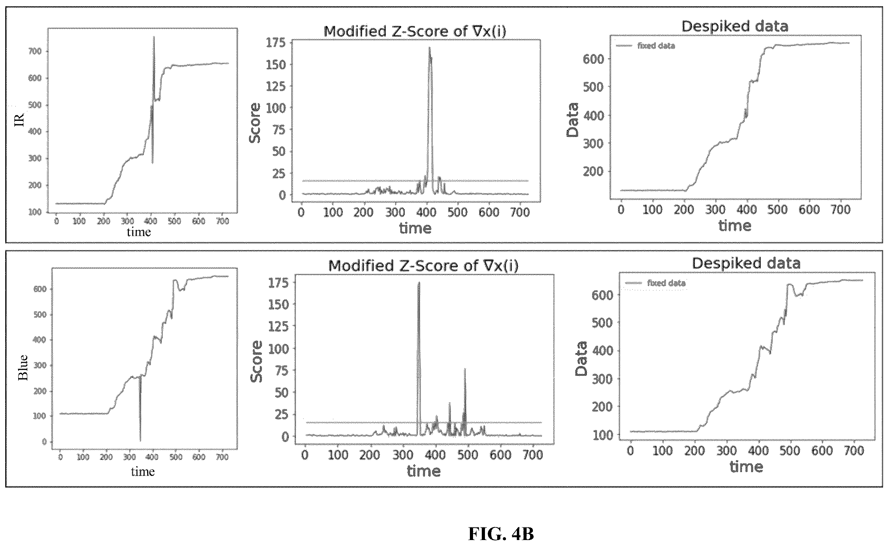

A natural occurring contamination of sensor data is spikes. Spikes are narrow bandwidth peaks present due external sources. These can hinder subsequent analysis, as such all current and future sensor data may be de-spiked according to various example embodiments. FIGS. 4A-4B show graphs illustrating example of optical IR and optical blue data with spike removal. FIG. 4A shows graphs illustrating original data with spikes from optical IR and optical blue data. Referring to FIG. 4A, it may be observed that the spikes and the underlying trend is clear. Similar to Raman spectroscopy that also experiences the same high intensity and small width spikes. Whitaker et. al. as noted above takes advantage of these properties by calculating the z-score of the difference between each data points, which removes any slow moving linear trends, while preserving sharp thin shapes as shown in FIG. 4B to detect spikes. More particularly, FIG. 4B shows graphs illustrating de-spiked optical IR and optical blue data. Afterwards, a curated threshold spike value is applied to exclude spikes through interpolation. This threshold was found by comparing between spiked and de-spiked data across all experiments.

### Data Labeling

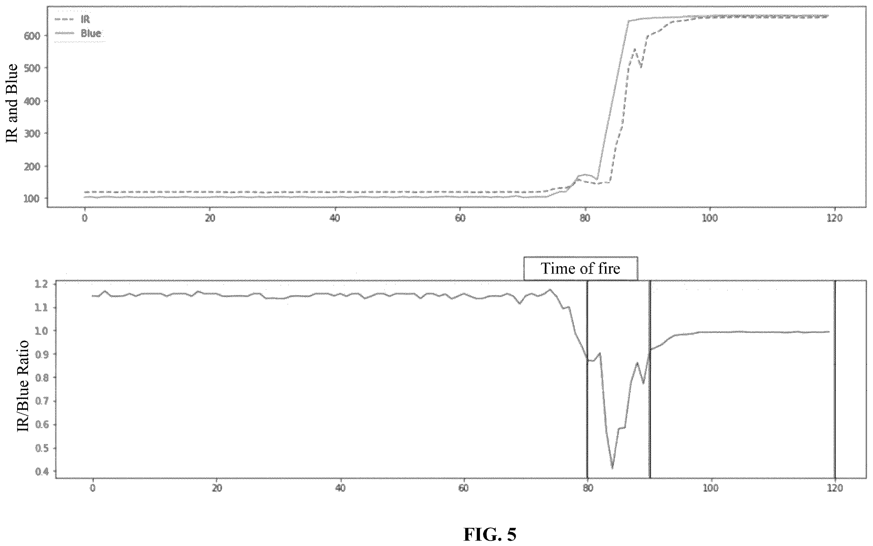

According to various embodiments, a component of data pre-processing was labelling where the ambient data ends and fire data begins. A penalized change point detection (CPD) was employed to detect abrupt shifts in sensor data trends and the first shift was selected as the point that segregates ambient data and fire data. This will not be done for the nuisance data. This can be seen in FIG. 5 where the first line index that cuts the graphs, this will be labeled as the time of a fire event. Accurate time of fire labeling is important due to early labeling causing the tendency for the ML model to predict ambient data as fire and late labeling removing an essential information for quick fire detection which is the transitional phase between no fire to a fire. More particularly, FIG. 5 shows graphs illustrating an example of data labeling using change point detection algorithm.

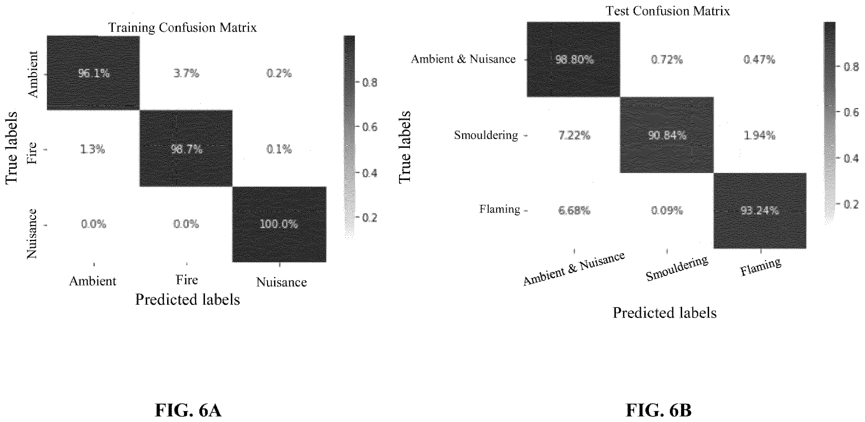

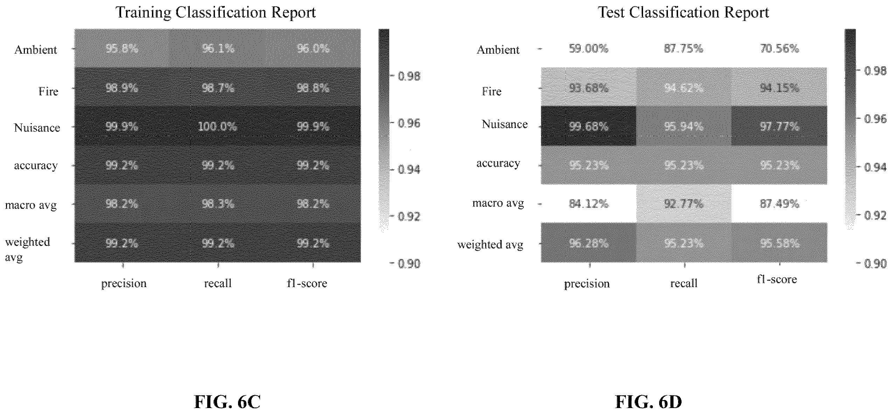

According to various example embodiments, with the extracted features and data labelling (corresponding to "the sensor measurement features" and "the pre-processed sensor data" respectively as described hereinbefore according to various embodiments), a supervised learning model may be used to classify ambient data (e.g., labelled as Class 0), fire data (e.g., labelled as Class 1) and nuisance data (e.g., labelled as Class 2). According to various example embodiments, the learning model may be XGBoost. FIGS. 6A-6D show diagrams illustrating confusion matrix with precision and recall of training and test data. More particularly, FIG. 6A illustrates a confusion matrix of training data, FIG. 6B illustrates a confusion matrix of test data, FIG. 6C illustrates precision and recall of training data, and FIG. 6D illustrates precision and recall of test data. As shown in FIGS. 6A-6D, the ML model performs well in classifying three classes for both the seen and unseen data. A strong ability to discern between fire and nuisance events with high training accuracy of nuisance data 100%, ambient data 98.7% and fire data 96.1% may be seen. Meanwhile, test accuracy of nuisance data 95.94% and fire data 94.62% was also achieved. The 87.75% of ambient accuracy and 10.04% of the wrongly predicted fire to ambient also reveals the effects of data labelling and the consequence of fire transition between the initial stage to the development stage.

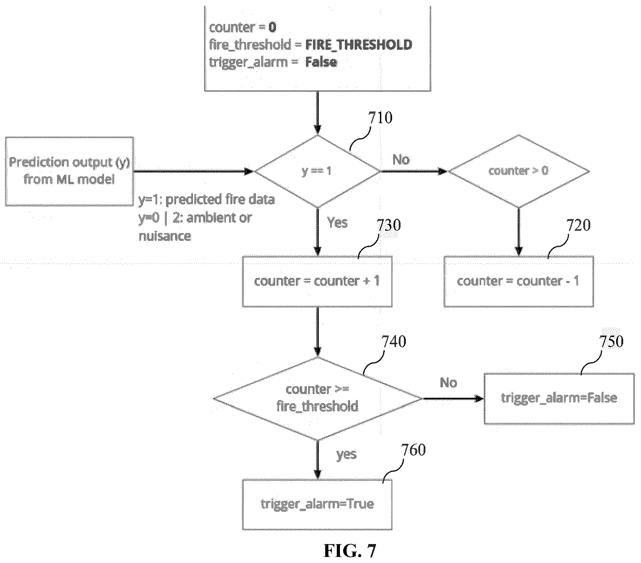

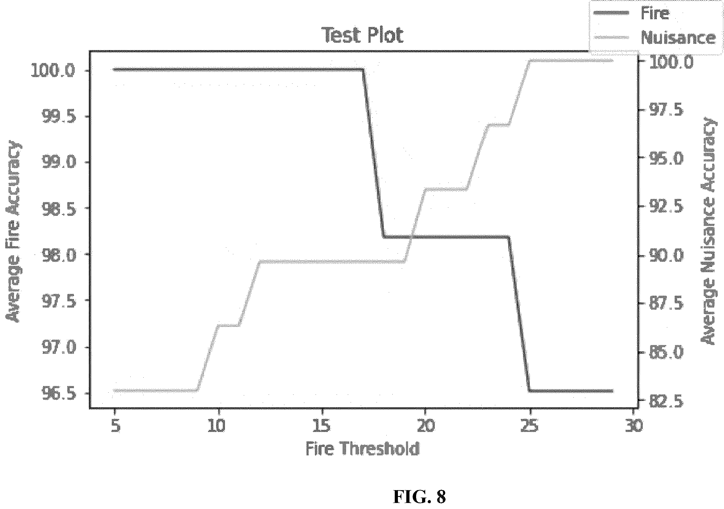

Relying on single-point fire prediction from machine learning to trigger an alarm in the event of fire is susceptible to false alarms, so it is desirable to have a final alarm decision algorithm to enhance the reliability of the machine learning-based smoke detectors. The algorithm takes a single-point prediction from the machine learning model and has a running counter to count the number of consecutive fire predictions. If the total number of consecutive predicted fire data is over a predefined threshold (e.g., corresponding to the "fire threshold" as described hereinbefore according to various embodiments), an alarm will go off. If at any point a non-fire prediction is made and the counter is more than 0, the counter is reduced by 1. This algorithm builds robustness by penalizing non-consecutive predictions which is expected from a developing fire. It is noted that a fire test is considered to be detected successfully if a smoke detector raises an alarm before an end of test condition which is defined in the Norm EN54-7. FIG. 7 depicts a flow chart of a fire alarm decision algorithm, according to the present invention. At 710, a determination is made as to whether a prediction output of the machine learning model is a fire event. If the prediction output is not a fire event, and the counter value is more than zero, at 720, the counter value will be reduced (i.e. subtraction of counter value of 1). If the prediction output is a fire event, at 730, the counter value will be increased (i.e., addition of counter value of 1). At 740, a determination is made as to whether the counter value is more than the fire threshold model. If the counter value is not more than the fire threshold model, at 750, a determination is made not to trigger an alarm. If the counter value is more than the fire threshold model, at 760, a determination is made to trigger an alarm. The value of the fire threshold (e.g., FIRE_THRESHOLD) may be chosen based on the trade-off between the accuracy of triggered alarms for all test fire experiments and the accuracy of non-triggered alarms for all nuisance experiments. As shown in FIG. 8, it can be observed that with FIRE_THRESHOLD of 12, alarms may be successfully raised for all test fires. However, 90% accuracy not to raise alarms for nuisance tests may be achieved. Due to the various sampling rate from 1 to 4 seconds in smoke detectors, a drop in accuracy to detect fire tests may be seen when the fire threshold is increased. However, this issue will be completely solvable if the same sampling rate of 1 or 2 seconds for all detectors can be kept.

Most of machine learning models such as neural networks act as black box models in which it is quite hard for human beings to understand why the ML models make these decisions, so the question if we should trust using a machine learning model for high stakes, safety related applications is often unsatisfyingly met with the advantages posed by the machine learning model. Therefore, according to various embodiments, SHAP as described in Lundberg et. al. noted above, a model-agnostic method, aimed at explaining intuitively how each feature impacts on the ML model prediction for each class as well as the global feature importance may be used.

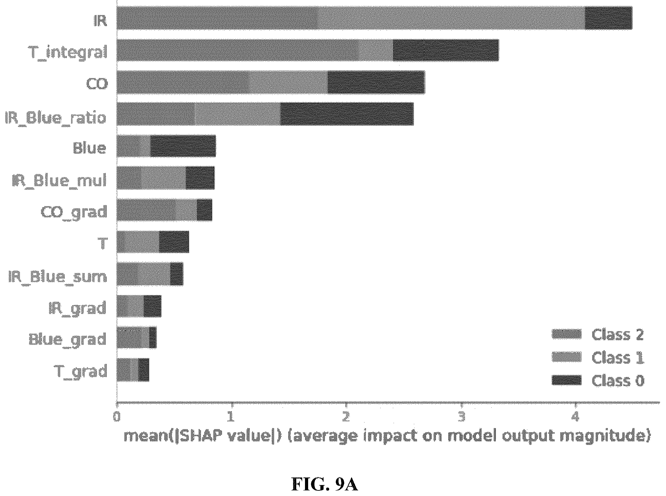

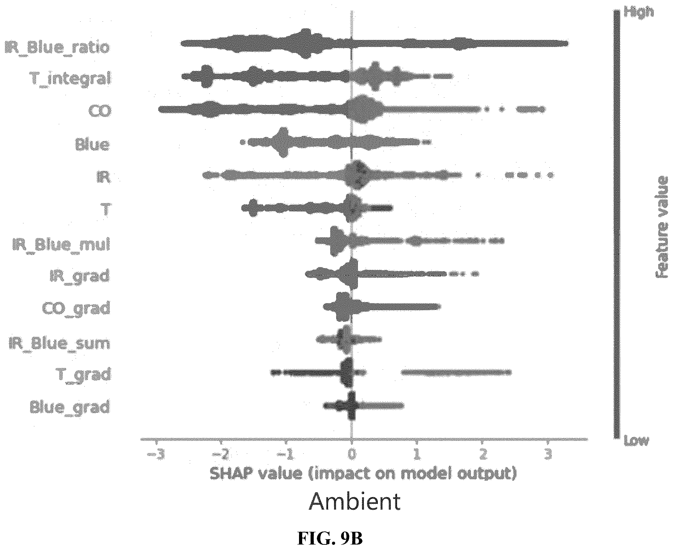

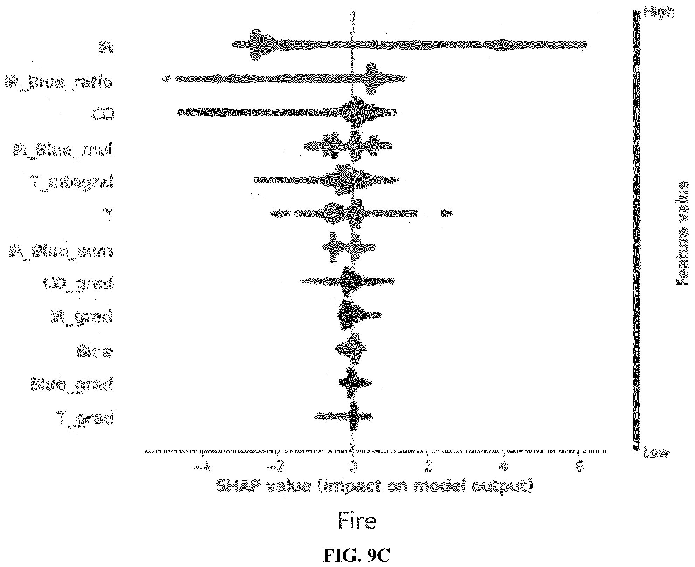

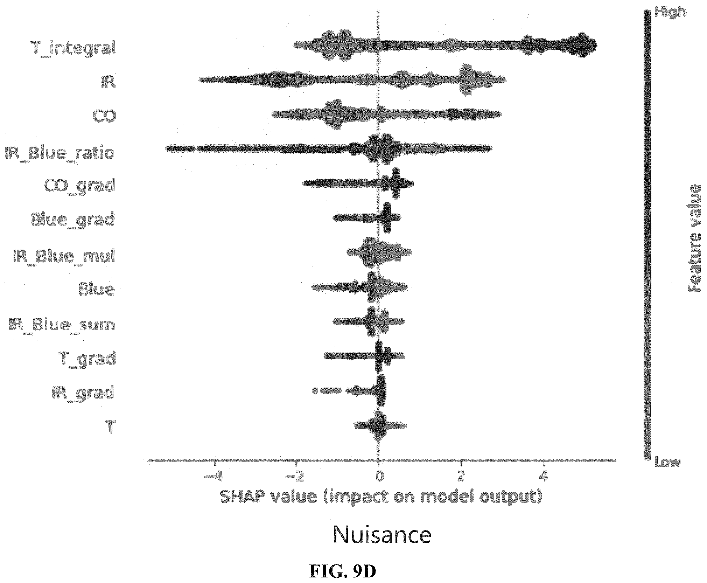

FIGS. 9A-9D demonstrate the SHAP Feature Importance and Summary Plots of each class in the dataset (ambient, fire and nuisance) using SHAP. More particularly, FIGS. 9A-9D show summary plots of ambient, fire and nuisance class combining feature importance with feature effects. FIG. 9A illustrates a plot of feature importance, FIG. 9B illustrates a summary plot of ambient class, FIG. 9C illustrates a summary plot of fire class, and FIG. 9D illustrates a summary plot of nuisance class. The SHAP explanation method computes Shapley value which is the average marginal contribution of a feature value across all possible coalitions from coalitional game theory. The feature values of a data instance act as players in a coalition, as described in Molnar noted above. The SHAP feature importance plot shows the importance of each feature in a descending order based on the Shapley values (e.g., corresponding to the "importance of a sensor measurement feature on the prediction using a Shapley value based method" as described hereinbefore according to various embodiments). In particular, from FIG. 9A, it can be seen that infrared light value (IR), integral of temperature (T_integral), carbon monoxide value (CO), ratio of infrared light to blue light (IR_Blue_ratio) and blue light value (Blue) are the top five important features that have more impact on the ML model prediction.

The summary plot combines feature importance with feature effects. Each point on the summary plot is a Shapley value for a feature at an instance. The position on the y-axis is determined by the feature value and on the x-axis by the Shapley value. The color intensity (illustrated in grayscale) represents the value of the feature from low to high. Overlapping points are stacked, so we get a sense of the distribution of the Shapley values per feature. The features are ordered according to their importance. From the summary plot, it can be seen first the relationship between the value of a feature and the impact on the prediction. Therefore, from FIGS. 9B, 9C and 9D, the relationship between feature values and the impact on the ML model prediction of each class are as follows.

For ambient class: IR_Blue_Ratio: higher value -> high impact on prediction; T_integral, CO, Blue, IR: low value -> high impact on prediction. For nuisance class: T_integral: medium to high value -> high impact on prediction; IR: low value -> high impact on prediction; CO: high value (Cigarette, sparker), low value (steam) -> high impact on prediction. For fire class: IR: medium to high value -> high impact on prediction IR_Blue_ratio: medium to high value -> high impact on prediction; CO: medium value -> high impact on prediction.

Looking at some of these causational relationships, their relations make logical, intuitive sense. Medium to high IR values have a high positive impact on fire predictions because a developed fire which has denser smoke particles has an increased likelihood to scatter the IR LED leading to higher IR values. A low T_integral, Blue and IR value has a high positive impact on ambient predictions due to room temperature having less dense particles in the air and lower temperatures. The combination of medium to high T_integral but low IR values has a high impact on nuisance prediction, as the heat produced may be hotter but the smoke produced is relatively less dense compared to smoke caused by fire.

Although the one or more above-described implementations have been described in language specific to structural features and/or methodological steps, it is to be understood that other implementations may be practiced without the specific features or steps described. Rather, the specific features and steps are disclosed as preferred forms of one or more implementations.

## Claims

1. A computer-implemented method of fire detection using at least one processor (206), the method comprising:
obtaining sensor data for detecting a fire event (102);
pre-processing the sensor data to produce pre-processed sensor data (104);
processing the sensor data to produce sensor measurement features (106);
predicting presence of a fire event based on the pre-processed sensor data and/or the sensor measurement features using a machine learning model (108); and
determining whether a fire threshold has been reached based on the prediction of the presence of the fire event (110)
**characterized in that** a running counter counts the number of consecutive fire predictions, wherein an alarm will go off, if a total number of consecutive fire predictions is over a predefined threshold, wherein the running counter is reduced by 1, if at any point a non-fire prediction is made and the counter is more than 0.

2. The method of claim 1, wherein the sensor measurement features comprises absolute values, gradient, integral, summation, multiplication and/or ratio of the sensor data.

3. The method of claim 1, wherein said pre-processing the sensor data further comprises spike removal and/or baseline shift.

4. The method of claim 1, wherein the pre-processed sensor data indicates a time of the fire event, and said pre-processing the sensor data to produce pre-processed sensor data comprises labeling the sensor data using a change point detection algorithm to determine the time of the fire event.

5. The method of claim 1, wherein the machine learning model being a tree-based model, and comprises XGBoost or random forest.

6. The method of claim 1, further comprising determining whether to trigger a notification based on whether the fire threshold has been reached.

7. The method of claim 1, wherein the sensor data comprises a plurality of different types of sensor signals captured using a plurality of different types of sensor devices, respectively, and the plurality of different types of sensor signals comprises an optical infrared signal, optical blue signal, carbon monoxide signal and/or thermal signal.

8. The method of claim 1, wherein the machine learning model is trained using a sensor dataset comprising data relating to fire events and data relating to a plurality of non-fire events including nuisance events and ambient conditions.

9. A system (200) for fire detection, the system comprising:
a memory (204); and
at least one processor (206) communicatively coupled to the memory (204) and configured to:
obtain sensor data for detecting a fire event (102);
pre-process the sensor data to produce pre-processed sensor data (104), the pre-processed sensor data comprises a time of the fire event;
process the sensor data to produce sensor measurement features (106);
predict presence of a fire event based on the pre-processed sensor data and/or the sensor measurement features using a machine learning model (108); and
determine whether a fire threshold has been reached based on the prediction of the presence of the fire event (110),
**characterized in that** a running counter counts the number of consecutive fire predictions, wherein an alarm will go off, if a total number of consecutive fire predictions is over a predefined threshold, wherein the running counter is reduced by 1, if at any point a non-fire prediction is made and the counter is more than 0.

10. A computer program product, embodied in one or more non-transitory computer-readable storage mediums, comprising instructions executable by at least one processor to perform a method of detecting fire, the method comprising:
obtaining sensor data for detecting a fire event (102);
pre-processing the sensor data to produce pre-processed sensor data (104), the pre-processed sensor data comprises a time of the fire event;
processing the sensor data to produce sensor measurement features (106);
predicting presence of a fire event based on the pre-processed sensor data and/or the sensor measurement features using a machine learning model (108); and
determining whether a fire threshold has been reached based on the prediction of the presence of the fire event (110),
**characterized in that** a running counter counts the number of consecutive fire predictions, wherein an alarm will go off, if a total number of consecutive fire predictions is over a predefined threshold, wherein the running counter is reduced by 1, if at any point a non-fire prediction is made and the counter is more than 0.

## Patentansprüche

1. Computerimplementiertes Verfahren zur Branderkennung unter Verwendung mindestens eines Prozessors (206), wobei das Verfahren umfasst:
Erhalten von Sensordaten zum Erkennen eines Brandereignisses (102);
Vorverarbeiten der Sensordaten, um vorverarbeitete Sensordaten zu erzeugen (104);
Verarbeiten der Sensordaten, um Sensormessmerkmale zu erzeugen (106);
Vorhersagen des Vorhandenseins eines Brandereignisses basierend auf den vorverarbeiteten Sensordaten und/oder den Sensormessmerkmalen unter Verwendung eines Maschinenlernmodells (108); und
Ermitteln, basierend auf der Vorhersage des Vorhandenseins des Brandereignisses, ob ein Brandschwellenwert erreicht wurde (110),
**dadurch gekennzeichnet, dass** ein laufender Zähler die Anzahl von aufeinanderfolgenden Brandvorhersagen zählt, wobei ein Alarm ausgelöst wird, wenn eine Gesamtanzahl von aufeinanderfolgenden Brandvorhersagen über einem vordefinierten Schwellenwert liegt, wobei der laufende Zähler um 1 reduziert wird, wenn an einem beliebigen Punkt eine Vorhersage eines Nicht-Brands erfolgt und der Zähler größer als 0 ist.

2. Verfahren nach Anspruch 1, wobei die Sensormessmerkmale Absolutwerte, einen Gradienten, ein Integral, eine Summierung, eine Multiplikation und/oder ein Verhältnis der Sensordaten umfassen.

3. Verfahren nach Anspruch 1, wobei das Vorverarbeiten der Sensordaten ferner eine Spitzenentfernung und/oder eine Basislinienverschiebung umfasst.

4. Verfahren nach Anspruch 1, wobei die vorverarbeiteten Sensordaten einen Zeitpunkt des Feuerereignisses anzeigen und wobei das Vorverarbeiten der Sensordaten zum Erzeugen von vorverarbeiteten Sensordaten ein Kennzeichnen der Sensordaten unter Verwendung eines Algorithmus zum Erkennen von Änderungspunkten umfasst, um den Zeitpunkt des Feuerereignisses zu ermitteln.

5. Verfahren nach Anspruch 1, wobei das Maschinenlernmodell ein baumbasiertes Modell ist und einen XGBoost oder einen Zufallsforst umfasst.

6. Verfahren nach Anspruch 1, das ferner ein Ermitteln umfasst, ob, basierend darauf, ob der Feuerschwellenwert erreicht wurde, eine Benachrichtigung ausgelöst wird.

7. Verfahren nach Anspruch 1, wobei die Sensordaten eine Vielzahl von unterschiedlichen Typen von Sensorsignalen umfassen, die jeweils unter Verwendung einer Vielzahl von unterschiedlichen Typen von Sensorvorrichtungen erfasst werden, und wobei die Vielzahl von unterschiedlichen Typen von Sensorsignalen ein optisches Infrarotsignal, ein optisches Blausignal, ein Kohlenmonoxidsignal und/oder ein thermisches Signal umfassen.

8. Verfahren nach Anspruch 1, wobei das Maschinenlernmodell unter Verwendung eines Sensordatensatzes trainiert wird, der Daten, die sich auf Feuerereignisse beziehen, und Daten umfasst, die sich auf eine Vielzahl von Nicht-Feuerereignissen beziehen, die ihrerseits Störereignisse und Umgebungsbedingungen beinhalten.

9. System (200) zur Branderkennung, wobei das System umfasst:
einen Speicher (204); und
einen Prozessor (206), der kommunikativ mit dem Speicher (204) gekoppelt ist und konfiguriert ist zum:
Erhalten von Sensordaten zum Erkennen eines Brandereignisses (102);
Vorverarbeiten der Sensordaten, um vorverarbeitete Sensordaten zu erzeugen (104), wobei die vorverarbeiteten Sensordaten einen Zeitpunkt des Brandereignisses umfassen;
Verarbeiten der Sensordaten, um Sensormessmerkmale zu erzeugen (106);
Vorhersagen des Vorhandenseins eines Brandereignisses basierend auf den vorverarbeiteten Sensordaten und/oder den Sensormessmerkmalen unter Verwendung eines Maschinenlernmodells (108); und
Ermitteln, basierend auf der Vorhersage des Vorhandenseins des Brandereignisses, ob ein Brandschwellenwert erreicht wurde (110),
**dadurch gekennzeichnet, dass** ein laufender Zähler die Anzahl von aufeinanderfolgenden Brandvorhersagen zählt, wobei ein Alarm ausgelöst wird, wenn eine Gesamtanzahl von aufeinanderfolgenden Brandvorhersagen über einem vordefinierten Schwellenwert liegt, wobei der laufende Zähler um 1 reduziert wird, wenn an einem beliebigen Punkt eine Vorhersage eines Nicht-Brands erfolgt und der Zähler größer als 0 ist.

10. Computerprogrammprodukt, das in einem oder mehreren nicht-flüchtigen computerlesbaren Speichermedien konkretisiert ist und das Anweisungen umfasst, die durch mindestens einen Prozessor ausführbar sind, um ein Verfahren zum Erkennen eines Brands durchzuführen, wobei das Verfahren umfasst:
Erhalten von Sensordaten zum Erkennen eines Brandereignisses (102);
Vorverarbeiten der Sensordaten, um vorverarbeitete Sensordaten zu erzeugen (104), wobei die vorverarbeiteten Sensordaten einen Zeitpunkt des Brandereignisses umfassen;
Verarbeiten der Sensordaten, um Sensormessmerkmale zu erzeugen (106);
Vorhersagen des Vorhandenseins eines Brandereignisses basierend auf den vorverarbeiteten Sensordaten und/oder den Sensormessmerkmalen unter Verwendung eines Maschinenlernmodells (108); und
Ermitteln, basierend auf der Vorhersage des Vorhandenseins des Brandereignisses, ob ein Brandschwellenwert erreicht wurde (110),
**dadurch gekennzeichnet, dass** ein laufender Zähler die Anzahl von aufeinanderfolgenden Brandvorhersagen zählt, wobei ein Alarm ausgelöst wird, wenn eine Gesamtanzahl von aufeinanderfolgenden Brandvorhersagen über einem vordefinierten Schwellenwert liegt, wobei der laufende Zähler um 1 reduziert wird, wenn an einem beliebigen Punkt eine Vorhersage eines Nicht-Brands erfolgt und der Zähler größer als 0 ist.

## Revendications

1. Procédé mis en œuvre par ordinateur de détection d'incendie utilisant au moins un processeur (206), le procédé comprenant :
l'obtention de données de capteur pour détecter un événement d'incendie (102) ;
le prétraitement des données de capteur pour produire des données de capteur prétraitées (104) ;
le traitement des données de capteur pour produire des caractéristiques de mesure de capteur (106) ;
la prédiction de la présence d'un événement d'incendie sur la base des données de capteur prétraitées et/ou des caractéristiques de mesure de capteur au moyen d'un modèle d'apprentissage automatique (108) ; et
le fait de déterminer si un seuil d'incendie a été atteint sur la base de la prédiction de la présence de l'événement d'incendie (110)
**caractérisé en ce qu'**un compteur cumulatif compte le nombre de prédictions d'incendie consécutives, dans lequel une alarme sera déclenchée, si un nombre total de prédictions d'incendie consécutives est supérieur à un seuil prédéfini, dans lequel le compteur cumulatif est réduit de 1, si à tout moment une prédiction de non-incendie est effectuée et que le compteur est supérieur à 0.

2. Procédé selon la revendication 1, dans lequel les caractéristiques de mesure de capteur comprennent des valeurs absolues, un gradient, une intégrale, une sommation, une multiplication et/ou un rapport des données de capteur.

3. Procédé selon la revendication 1, dans lequel ledit prétraitement des données de capteur comprend en outre la suppression des pics et/ou le décalage de la ligne de base.

4. Procédé selon la revendication 1, dans lequel les données de capteur prétraitées indiquent un moment de l'événement d'incendie, et ledit prétraitement des données de capteur pour produire des données de capteur prétraitées comprend l'étiquetage des données de capteur au moyen d'un algorithme de détection de point de changement pour déterminer le moment de l'événement d'incendie.

5. Procédé selon la revendication 1, dans lequel le modèle d'apprentissage automatique est un modèle en arbre, et comprend un modèle XGBoost ou de forêts d'arbres décisionnels.

6. Procédé selon la revendication 1, comprenant en outre le fait de déterminer s'il faut déclencher une notification sur la base du fait que le seuil d'incendie a été atteint ou non.

7. Procédé selon la revendication 1, dans lequel les données de capteur comprennent une pluralité de types différents de signaux de capteur capturés au moyen d'une pluralité de types différents de dispositifs de capteur, respectivement, et la pluralité de types différents de signaux de capteur comprend un signal optique infrarouge, un signal optique bleu, un signal de monoxyde de carbone et/ou un signal thermique.

8. Procédé selon la revendication 1, dans lequel le modèle d'apprentissage automatique est entraîné au moyen d'un ensemble de données de capteur comprenant des données relatives à des événements d'incendie et des données relatives à une pluralité d'événements de non-incendie incluant des événements de nuisance et des conditions ambiantes.

9. Système (200) de détection d'incendie, le système comprenant :
une mémoire (204) ; et
au moins un processeur (206) couplé en communication à la mémoire (204) et configuré pour :
obtenir des données de capteur pour détecter un événement d'incendie (102) ;
prétraiter les données de capteur pour produire des données de capteur prétraitées (104), les données de capteur prétraitées comprenant un moment de l'événement d'incendie ;
traiter les données de capteur pour produire des caractéristiques de mesure de capteur (106) ;
prédire la présence d'un événement d'incendie sur la base des données de capteur prétraitées et/ou des caractéristiques de mesure de capteur au moyen d'un modèle d'apprentissage automatique (108) ; et
déterminer si un seuil d'incendie a été atteint sur la base de la prédiction de la présence de l'événement d'incendie (110),
**caractérisé en ce qu'**un compteur cumulatif compte le nombre de prédictions d'incendie consécutives, dans lequel une alarme sera déclenchée, si un nombre total de prédictions d'incendie consécutives est supérieur à un seuil prédéfini, dans lequel le compteur cumulatif est réduit de 1, si à tout moment une prédiction de non-incendie est effectuée et que le compteur est supérieur à 0.

10. Produit programme d'ordinateur, mis en œuvre dans un ou plusieurs supports de stockage non transitoires lisibles par ordinateur, comprenant des instructions exécutables par au moins un processeur pour mettre en œuvre un procédé de détection d'incendie, le procédé comprenant :
l'obtention de données de capteur pour détecter un événement d'incendie (102) ;
le prétraitement des données de capteur pour produire des données de capteur prétraitées (104), les données de capteur prétraitées comprenant un moment de l'événement d'incendie ;
le traitement des données de capteur pour produire des caractéristiques de mesure de capteur (106) ;
la prédiction de la présence d'un événement d'incendie sur la base des données de capteur prétraitées et/ou des caractéristiques de mesure de capteur au moyen d'un modèle d'apprentissage automatique (108) ; et
le fait de déterminer si un seuil d'incendie a été atteint sur la base de la prédiction de la présence de l'événement d'incendie (110),
**caractérisé en ce qu'**un compteur cumulatif compte le nombre de prédictions d'incendie consécutives, dans lequel une alarme sera déclenchée, si un nombre total de prédictions d'incendie consécutives est supérieur à un seuil prédéfini, dans lequel le compteur cumulatif est réduit de 1, si à tout moment une prédiction de non-incendie est effectuée et que le compteur est supérieur à 0.
